# DEMANDE DE BREVET EUROPEEN

(11) **EP 4 729 328 A1**
(43) Date de publication de la demande: **22.04.2026**
(21) Numéro de dépôt: 25202786.7
(22) Date de dépôt: 17.09.2025
(51) Int. Cl.: B60K 35/10, B60K 35/22, B60S 1/08

(54) **PROCÉDÉ ET DISPOSITIF DE CONTRÔLE D'UN SYSTÈME D'ESSUIE-GLACE DE VÉHICULE**

(30) Priorité: 21.10.2024 FR 2411385
(71) Demandeur: Stellantis Auto SAS, 78300 Poissy (FR)
(72) Inventeur: POITEVIN, THOMAS, 91620 NOZAY (FR); BAYARD, LOIC, 91470 FORGES LES BAINS (FR)
(74) Mandataire: ESIP

(57) **Abrégé**

La présente invention concerne un procédé et un dispositif de contrôle d'un système d'essuie-glace d'un véhicule comprenant un écran tactile (12). A cet effet, des données représentatives d'une détection de pluie et/ou neige sur un pare-brise avant du véhicule sont reçues. Un bouton de contrôle d'essuie-glace est affiché sur l'écran tactile (12) selon une première représentation graphique (320). Une commande d'activation du système d'essuie-glace est transmise suivant un appui tactile sur le bouton de contrôle.

## Description

### Domaine technique

L'invention concerne les procédés et dispositifs de contrôle d'un système d'essuie-glace d'un véhicule, notamment mais non exclusivement un véhicule automobile. L'invention concerne notamment un procédé et un dispositif de contrôle d'affichage d'un bouton de déclenchement d'un système d'essuie-glace du véhicule.

### Arrière-plan technologique

Les véhicules contemporains sont équipés d'un système d'essuie-glace configuré pour activer/désactiver le fonctionnement des essuie-glaces, notamment les essuie-glaces du pare-brise avant, via un bouton de commande. Le système d'essuie-glace permet de mettre en mouvement les balais d'essuie-glaces, qui vont balayer la surface du pare-brise de manière rythmée pour éliminer les gouttes de pluie. Ce fonctionnement contribue ainsi à maintenir une vision claire de la route et à assurer la sécurité du conducteur et des passagers

Le contrôle du système d'essuie-glace de pare-brise avant se fait par l'actionnement manuel d'un organe de commande généralement disposé au niveau du volant du véhicule. Un tel organe de commande correspond par exemple à un commodo sous le volant ou à un module de commande. Un même commodo ou module est généralement utilisé pour contrôler différents systèmes ou organes du véhicule, par exemple pour commander le système de lave-glace et les clignotants d'un côté du véhicule.

Le contrôle manuel du système d'essuie-glace via le commodo ou le module de commande est ainsi parfois compliquée et peu intuitive, la visibilité de l'organe de commande situé sur le commodo ou module de commande étant réduite du fait de l'emplacement de ce commodo ou module qui se trouve derrière et/ou sous le volant. Or, en cas de forte pluie par exemple, la visibilité se réduit, et nécessite donc une attention accrue du conducteur sur la route. Le conducteur, qui doit porter une attention plus particulière à la route alors que la visibilité diminue, peut rencontrer des difficultés à utiliser rapidement le commodo pour activer le système d'essuie-glace.

La manipulation du commodo ou module de commande génère en outre des risques de sécurité pour le véhicule, l'attention du conducteur cherchant à activer les essuie-glaces via le système d'essuie-glace pouvant être réduite du fait de cette complexité et/ou faible visibilité.

Dans les véhicules les plus récents, l'activation des essuie-glaces peut se faire automatiquement, par la réception des données de capteurs de pluie intégrés. Ces capteurs détectent la présence d'eau sur le pare-brise et déclenchent le système sans nécessiter d'intervention manuelle. Cependant, les capteurs, une fois mouillés, ne font pas toujours la différence entre la pluie et le gel. Cela pose un problème majeur, car si les essuie-glaces se déclenchent alors qu'ils sont immobilisés par une couche de gel sur le pare-brise, cela pourrait endommager le mécanisme ou même casser les moteurs qui actionnent les balais. Pour cette raison, la fonction d'essuyage automatique est souvent désactivée par défaut lors de chaque démarrage du véhicule. L'utilisateur doit réactiver manuellement cette option, ce qui peut parfois être négligé ou oublié.

Dans d'autres cas, la sensibilité des capteurs est volontairement réduite pour éviter tout risque de casse dû au gel, mais cela peut entraîner un retard dans l'activation des essuie-glaces, en particulier lors de petites averses.

### Résumé de la présente invention

Un objet de la présente invention est de résoudre au moins l'un des problèmes de l'arrière-plan technologique décrit précédemment.

Un objet de la présente invention est par exemple de faciliter le contrôle ou la commande d'un système d'essuie-glace d'un véhicule.

Un autre objet de la présente invention est par exemple de minimiser la perte de temps du conducteur pour trouver le bouton de contrôle du système d'essuie-glace.

Selon un premier aspect, la présente invention concerne un procédé de contrôle d'un système d'essuie-glace d'un véhicule, le véhicule embarquant un système d'affichage comprenant un écran tactile, le procédé étant mis en œuvre par un processeur et comprenant les étapes suivantes :
- réception de premières données représentatives d'une détection de pluie et/ou neige sur le pare-brise avant du véhicule
- contrôle d'affichage d'un bouton de contrôle du système d'essuie-glace sur une zone d'affichage principale de l'écran tactile selon une première représentation graphique en fonction des premières données, une taille du bouton de contrôle selon la première représentation graphique étant supérieure à un premier seuil déterminé,
- réception de deuxièmes données représentatives d'un appui tactile sur le bouton de contrôle,
- transmission de troisièmes données représentatives d'une commande d'activation du système d'essuie-glace à destination d'un contrôleur du système d'essuie-glace, la transmission étant déclenchée par la réception des deuxièmes données.

La détection de la présence de pluie et/ou neige sur le pare-brise avant du véhicule permet une réactivité importante en fonction des conditions de conduite, augmentant la sécurité du véhicule. L'affichage d'un bouton de contrôle du système d'essuie-glace sur l'écran tactile avec une taille importante, c'est-à-dire supérieure à un seuil déterminé, permet un appui rapide et intuitif sur celui-ci par rapport à un bouton physique ou tactile de taille réduite, sans que le conducteur n'aie besoin de détourner son attention de la route pour chercher le bouton, permettant d'améliorer l'attention du conducteur sur la route, et ainsi améliorer la sécurité du véhicule et des autres usagers de la route.

Selon une variante, le premier seuil représente un ratio entre la taille du bouton de contrôle et une taille totale d'une zone d'affichage principale de l'écran tactile.

Selon une variante, le premier seuil est égal à 90%.

Selon une variante, le premier seuil est égal à 50%.

Selon une autre variante, le premier seuil est paramétrable via une IHM (Interface Homme-Machine) du véhicule.

Selon encore une variante, le procédé comprend en outre une étape de contrôle d'affichage du bouton de contrôle du système d'essuie-glace sur l'écran tactile selon une deuxième représentation graphique, une taille du bouton de contrôle selon la deuxième représentation graphique étant inférieure à un second seuil, le second seuil étant inférieur au premier seuil.

Selon une autre variante, l'affichage du bouton de contrôle selon la deuxième représentation graphique est effectué sur une zone d'affichage secondaire de l'écran tactile.

Selon un deuxième aspect, la présente invention concerne un dispositif de contrôle d'un système d'essuie-glace d'un véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 7 annexées, sur lesquelles :
[Fig. 1] illustre schématiquement une partie d'habitacle d'un véhicule, selon un exemple de réalisation particulier de la présente invention ;
[Fig. 2] illustre schématiquement un écran du véhicule de la figure 1, selon un premier exemple de réalisation particulier et non limitatif de la présente invention ;
[Fig. 3] illustre schématiquement l'écran du véhicule de la figure 1, selon un deuxième exemple de réalisation particulier et non limitatif de la présente invention ;
[Fig. 4] illustre schématiquement l'écran du véhicule de la figure 1, selon un troisième exemple de réalisation particulier et non limitatif de la présente invention ;
[Fig. 5] illustre schématiquement l'écran du véhicule de la figure 1, selon un quatrième exemple de réalisation particulier et non limitatif de la présente invention ;
[Fig. 6] illustre un dispositif configuré pour contrôler un système d'essuie-glace du véhicule de la figure 1, selon un exemple de réalisation particulier et non limitatif de la présente invention.
[Fig. 7] illustre un organigramme des différentes étapes d'un procédé de contrôle d'un système d'essuie-glace du véhicule de la figure 1, selon un exemple de réalisation particulier et non limitatif de la présente invention.

### Description des exemples de réalisation

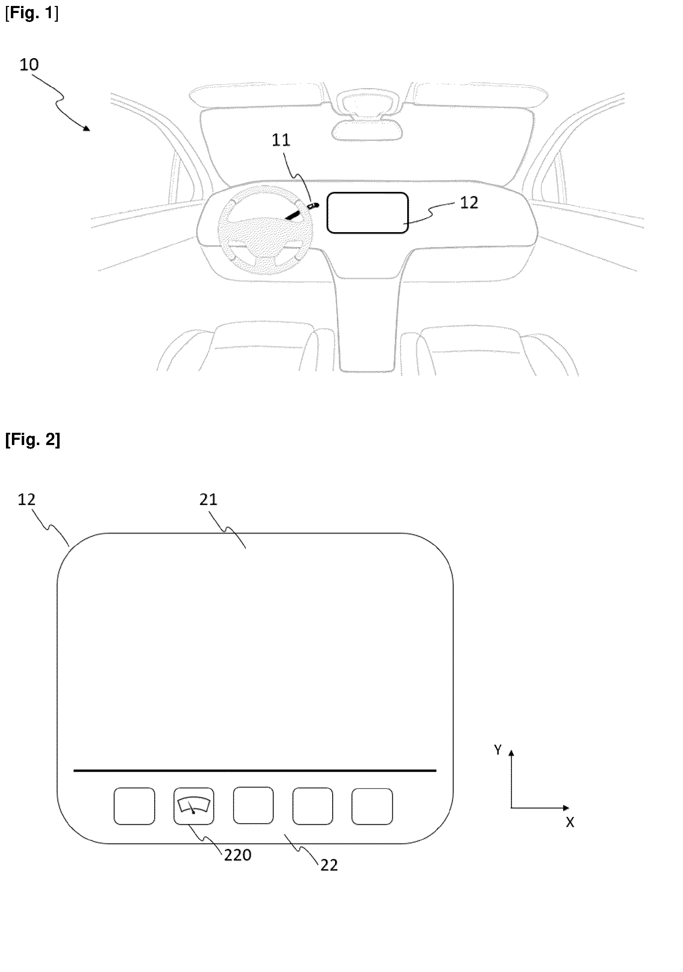

Un procédé et un dispositif de contrôle d'un système d'essuie-glace d'un véhicule vont maintenant être décrits dans ce qui va suivre en référence conjointement aux figures 1 à 7. Des mêmes éléments sont identifiés avec des mêmes signes de référence tout au long de la description qui va suivre.

Les termes « premier(s) », « deuxième(s) » (ou « première(s) », « deuxième(s) »), etc. sont utilisés dans ce document par convention arbitraire pour permettre d'identifier et de distinguer différents éléments (tels que des opérations, des moyens, etc.) mis en œuvre dans les modes de réalisation décrits ci-après. De tels éléments peuvent être distincts ou correspondre à un seul et unique élément, selon le mode de réalisation.

Selon un exemple particulier et non limitatif de réalisation de la présente invention, le contrôle d'un système d'essuie-glace est mis en œuvre par un ou plusieurs calculateurs du véhicule, notamment par un ou plusieurs processeurs de ce ou ces calculateurs. Le véhicule embarque en outre un système d'affichage comprenant un écran à interface tactile, dit écran tactile, contrôlé par un calculateur, par exemple le calculateur du système d'infodivertissement du véhicule, dit calculateur IVI (de l'anglais « In-Vehicle Infotainment » ou en français « Infodivertissement embarqué »).

Des premières données représentatives d'une détection d'un de pluie et/ou neige sur le pare-brise avant du véhicule sont reçues. Ces premières données correspondent par exemple à des données de capteur de pluie indiquant la présence de pluie sur le pare-brise avant. Suivant la réception des premières données, le calculateur contrôle l'affichage du bouton de contrôle du système d'essuie-glace selon une première représentation graphique, la taille du bouton de contrôle selon la première représentation graphique étant supérieure à un seuil déterminé pour que le bouton de contrôle soit plus facilement visible et accessible par un utilisateur du véhicule. Des deuxièmes données représentatives d'un appui tactile sur le bouton de contrôle sont reçues de l'interface tactile, par exemple lorsqu'un utilisateur effectue un appui tactile sur l'écran tactile à l'endroit d'affichage du bouton de contrôle. En réponse à ces deuxièmes données, des troisièmes données représentatives d'une commande d'activation du système d'essuie-glace sont transmises à destination d'un contrôleur du système d'essuie-glace, par exemple pour déclencher le fonctionnement des essuie-glaces.

La figure 1 illustre schématiquement une partie d'habitacle du véhicule 10, selon un exemple de réalisation particulier et non limitatif de la présente invention.

Le véhicule 10 correspond par exemple à un véhicule à moteur thermique, à moteur(s) électrique(s) ou encore un véhicule hybride avec un moteur thermique et un ou plusieurs moteurs électriques. Le véhicule 10 correspond ainsi par exemple à un véhicule terrestre, par exemple une automobile, un camion, un car.

Le véhicule 10 embarque avantageusement un système d'essuie-glace configuré pour commander l'activation ou la désactivation du balayage des essuie-glaces du véhicule 10.

Dans un mode de réalisation de la présente invention, le véhicule 10 embarque un commodo 11 configuré pour commander diverses fonctionnalités du véhicule 10, par exemple le fonctionnement du lave-glace, ou des clignotants du véhicule 10.

Selon un exemple, une fonctionnalité du commodo 11 permet l'activation et la désactivation du balayage des essuie-glaces véhicule 10.

Le véhicule 10 embarque un système d'affichage comprenant un écran à interface tactile 12 et un calculateur configuré pour contrôler l'affichage de contenu(s) d'une interface homme-machine, dite IHM, graphique sur l'écran tactile 12. Le calculateur correspond par exemple au calculateur du système d'infodivertissement, dit calculateur IVI (de l'anglais « In-Vehicle Infotainment » ou en français « Infodivertissement embarqué ») du véhicule 10.

L'écran tactile 12 correspond par exemple à un écran de type LCD (de l'anglais « Liquid Crystal Display » ou en français « Affichage à cristaux liquides »), par exemple de type TFT (de l'anglais « Thin-Film Transistor » ou en français « Transistor en film mince »), ou OLED (de l'anglais « Organic Light-Emitting Diode » ou en français « Diode électroluminescente organique »).

La figure 2 illustre schématiquement l'écran tactile 12, selon un exemple de réalisation particulier et non limitatif de la présente invention.

Selon un mode de réalisation, l'écran tactile 12 est constitué d'une zone d'affichage principale 21 et d'une zone d'affichage secondaire 22. Par exemple, la zone d'affichage principale 21 est utilisée pour afficher un ensemble d'informations à destination du conducteur et/ou des passagers du véhicule 10, par exemple des informations de navigation, ou des informations relatives à l'état de fonctionnement du véhicule 10. Selon un mode de réalisation illustré sur la figure 2, la zone d'affichage secondaire 22 est utilisée pour afficher différents boutons tactiles de commande de systèmes du véhicule 10, par un exemple un bouton de contrôle de système d'essuie-glace affiché selon une deuxième représentation graphique 220.

Selon un autre mode de réalisation, l'écran tactile 12 est constitué d'une seule zone d'affichage principale 21, occupant l'ensemble de la zone d'affichage disponible de l'écran tactile 12, par exemple dans le cas où le véhicule 10 dispose d'un commodo 11 et/ou d'une console centrale comprenant des boutons physiques, ne nécessitant pas l''affichage de tels boutons sur l'écran tactile 12.

L'écran tactile 12 est configuré pour afficher des contenus à destination du conducteur et des passagers du véhicule 10. L'écran tactile 12 est également configuré pour permettre au conducteur et/ou aux passagers du véhicule 10 d'interagir avec un ou plusieurs systèmes embarqués dans le véhicule 10 via une interface homme machine (IHM) affichée sur l'écran tactile 12. Par exemple, l'écran tactile 12 est configuré pour interagir avec le système IVI et/ou le système d'essuie-glace du véhicule 10.

Le système d'affichage du véhicule 10 est relié en communication avec le système d'essuie-glace du véhicule 10, par exemple le calculateur en charge du système d'affichage (par exemple le calculateur IVI) est relié en communication au calculateur (aussi appelé contrôleur) en charge du système d'essuie-glace via un ou plusieurs bus de données du réseau embarqué du véhicule 10.

Un problème qui se pose alors concerne l'appui sur un bouton de contrôle physique du système d'essuie-glace par le conducteur du véhicule 10, par exemple sur le commodo 11, lorsqu'une activation des essuie-glaces est nécessaire, par exemple lors d'une averse de forte intensité. L'activation de la bonne fonctionnalité sur le commodo 11 nécessite une précision accrue du conducteur du véhicule 10, alors que son attention doit se focaliser sur la route, la visibilité sur celle-ci diminuant au fur et à mesure que la pluie occupe le pare-brise.

De plus, dans le cas d'une fonction automatique d'activation des essuie-glaces, celle-ci peut ne pas être activé automatiquement au démarrage du véhicule 10, et le conducteur peut avoir oublié d'activer la fonction. Ainsi, lors d'une averse de forte intensité réduisant la visibilité et sollicitant la réactivité du conducteur du véhicule 10, les actions nécessaires pour réactiver la fonction ou passer en activation manuelle des essuie-glaces via le commodo 11 peuvent dérouter le conducteur et réduire son attention sur la route.

Un processus de contrôle du système d'essuie-glace du véhicule 10 est avantageusement mis en œuvre par un ou plusieurs processeurs, par exemple un ou plusieurs processeurs du calculateur IVI et/ou un ou plusieurs processeurs du calculateur ou contrôleur en charge du système d'essuie-glace.

Dans une première opération du processus, au moins un processeur du véhicule 10, par exemple le calculateur IVI ou un ensemble de calculateurs, reçoit des premières données représentatives d'une détection d'une présence de pluie et/ou neige sur un pare-brise du véhicule 10.

Selon un mode de réalisation, ces premières données sont par exemple reçues d'un capteur de pluie du véhicule 10. Ce capteur, par exemple de type optoélectronique, détecte les gouttes de pluie sur le pare-brise au moyen d'une mesure à infrarouge. Par exemple, les premières données correspondent à une quantité de pluie actuelle détectée sur un pare-brise par le capteur de pluie.

Selon une variante, ces premières données sont par exemple reçues d'une caméra de détection du véhicule 10. Cette caméra identifie les gouttes de pluie présentes sur un pare-brise du véhicule 10. Par exemple, les premières données correspondent à une quantité de pluie actuelle détectée sur un pare-brise par la caméra.

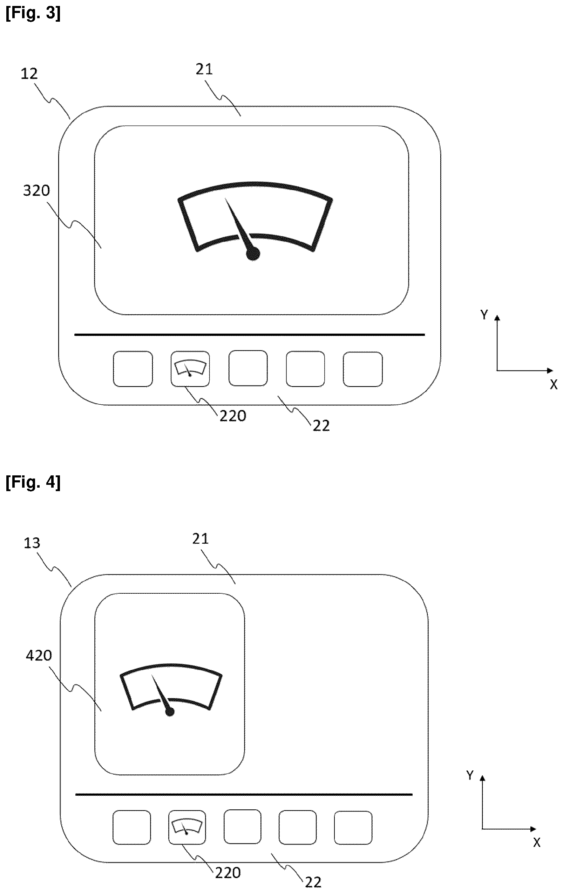

Dans une deuxième opération du processus, illustré sur la figure 3, l'affichage d'un bouton de contrôle de système d'essuie-glace est contrôlé de telle manière que le bouton soit affiché sur la zone d'affichage principale 21 de l'écran tactile 12 selon une première représentation graphique 320, la taille du bouton de contrôle selon la première représentation graphique 320 étant supérieure à un premier seuil déterminé.

Le bouton de contrôle est affiché dans un contenu déterminé d'une interface homme-machine, dite IHM, lequel contenu est affiché sur l'écran tactile 12.

La première représentation graphique 320 représente par exemple un pare-brise de véhicule et un essuie-glace.

Le fait que la taille du bouton de contrôle selon la première représentation graphique 320 soit supérieure à un premier seuil déterminé, permet un affichage visible facilement par le conducteur sur l'écran tactile 12, pour déclencher rapidement l'activation du système d'essuie-glace.

Selon un mode de réalisation, le premier seuil représente un ratio entre la taille du bouton de contrôle selon la première représentation graphique 320 et la taille totale de la zone d'affichage principale 21 de l'écran tactile 12. Ce ratio est exprimé en pourcentage d'occupation de la taille totale de la zone d'affichage principale 21 par le bouton de contrôle selon la première représentation graphique 320.

Un contrôle d'affichage d'un contenu graphique ou de tout objet graphique (texte, pictogramme, icône, bouton de contrôle, témoin, etc.) comprend un rendu du contenu graphique ou de l'objet graphique, un tel rendu correspondant à un ensemble d'opérations effectuées par un ou plusieurs processeurs sur les pixels d'une ou plusieurs images du contenu graphique à afficher sur l'écran tactile 12. Par exemple, le rendu consiste à associer à un ensemble de pixels d'une image des données de pixels (par exemple des données de couleurs exprimées dans un espace de type RGB (de l'anglais « Red, Green, Blue » ou en français « rouge, vert, bleu »)) associés à chaque objet graphique.

Le contrôle d'affichage du bouton de contrôle selon la première représentation graphique comprend ainsi la transmission de signaux de contrôle à destination de l'écran tactile 12 pour modifier les valeurs associées aux pixels de l'écran tactile 12 à l'endroit prévu pour afficher le bouton de contrôle selon la première représentation graphique 320 (ou tout objet graphique).

Selon un exemple de réalisation particulier, le premier seuil est égal à 90%. Ainsi le bouton de contrôle sera affiché avec une taille supérieure à 90% de la taille de la zone d'affichage principale 21, comme illustré sur la figure 3. Un premier seuil égal à 90% permet d'informer le conducteur de l'urgence d'activer le système d'essuie-glace, car la visibilité est réduite. Un autre avantage est de permettre au conducteur d'appuyer sur le bouton de contrôle sans regarder l'écran tactile 12, tout en gardant le regard fixé sur la route.

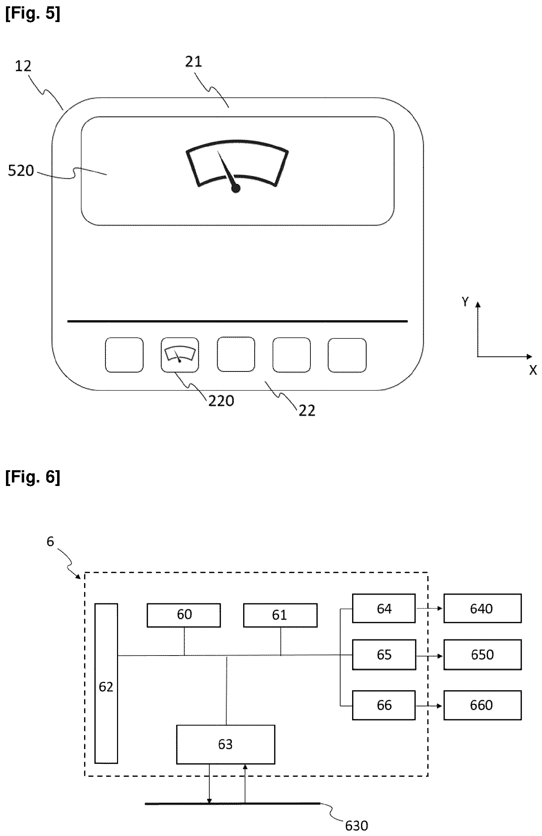

Selon un autre exemple de réalisation particulier, le premier seuil est égal à 50%. Ainsi le bouton de contrôle sera affiché avec une taille supérieure à 50% de la taille de la zone d'affichage principale 21, comme illustré sur les figures 4 et 5. Par exemple, un premier seuil de 50% permet de faciliter l'appui tactile par le conducteur sur le bouton de contrôle, en conservant une zone d'affichage disponible sur la zone d'affichage principale pour afficher d'autres informations utiles au conducteur pour assurer le contrôle et la supervision du véhicule 10, par exemple des informations de navigation.

Selon un mode de réalisation illustré par la figure 4, la première représentation graphique 420 occupe la partie gauche de la zone d'affichage principale de l'écran tactile 12, et la partie droite de la zone d'affichage principale de l'écran tactile 12 est disponible pour afficher d'autres informations.

Selon un mode de réalisation illustré par la figure 5, la première représentation graphique 520 occupe la partie haute de la zone d'affichage principale de l'écran 12, et la partie basse de la zone d'affichage principale de l'écran 12 est disponible pour afficher d'autres informations.

Selon un autre mode de réalisation, le premier seuil représente des dimensions en pixels d'une hauteur et d'une largeur d'une zone rectangulaire minimale sur laquelle afficher le bouton de contrôle.

Selon un mode de réalisation, le premier seuil est paramétrable via une IHM (Interface Homme-Machine) du véhicule 10. Par exemple, le premier seuil est paramétrable en choisissant sa valeur dans un menu ou une page de l'IHM. Le conducteur sélectionne un seuil selon ses préférences, par exemple un seuil élevé si le conducteur souhaite que l'appui sur le bouton de contrôle selon la première représentation graphique 320, 420 ou 520 soit facilité.

Dans une troisième opération du processus, des deuxièmes données représentatives d'un appui tactile sur le bouton de contrôle affiché selon la première représentation graphique 320, 420 ou 520 sont reçues, suivant un appui tactile d'un utilisateur (par exemple le conducteur du véhicule 10) sur le bouton de contrôle affiché sur l'écran tactile 12.

Un appui tactile sur le bouton de contrôle affiché selon la première représentation graphique 320, 420 ou 520 envoie une information au calculateur IVI pour que ce dernier mette en œuvre une ou plusieurs fonctions associées à la commande correspondant à l'appui tactile.

Les deuxièmes données représentatives d'un appui tactile sont par exemple reçues via un ou plusieurs bus de données reliant l'interface tactile de l'écran (ou un calculateur contrôlant une telle interface tactile le cas échéant) et le calculateur IVI.

L'appui tactile correspond à un appui tactile court ou bref selon lequel la durée d'appui sur le bouton de contrôle est inférieure à une durée seuil (par exemple égale à 500 ou 1000 ms). Selon une variante, l'appui tactile correspond à un appui tactile long selon lequel la durée d'appui sur le bouton de contrôle est supérieure à la durée seuil (par exemple égale à 500 ou 1000 ms).

Dans une quatrième opération du processus, le calculateur IVI transmet des troisièmes données représentatives d'une commande ou requête d'activation du système d'essuie-glace à destination du contrôleur du système d'essuie-glace, la transmission des troisièmes données étant déclenchée par la réception des premières données par le calculateur IVI.

Ces troisièmes données sont par exemple transmises via un ou plusieurs bus de données reliant le calculateur IVI et un calculateur de contrôle du système d'essuie-glace.

La commande ou requête d'activation permet d'activer le système d'essuie-glace, et de déclencher le fonctionnement des balais d'essuie-glace pour éliminer la pluie présente sur un pare-brise du véhicule 10.

Selon une variante, la durée d'affichage du bouton de contrôle selon la première représentation graphique 320, 420 ou 520 sur la zone d'affichage principal de l'écran tactile 12 est une durée fixe. Par exemple, la durée d'affichage du bouton de contrôle selon la première représentation graphique 320, 420 ou 520 sur la zone d'affichage principale de l'écran tactile 12 est de 10, 15 ou 20 secondes. Le conducteur dispose ainsi d'un laps de temps pour prendre la décision d'appuyer sur le bouton de contrôle, par exemple dans le cas où le véhicule 10 se trouve actuellement dans un virage nécessitant le contrôle du volant par le conducteur avec ses deux mains, et donc un délai entre l'apparition du bouton de contrôle selon la première représentation graphique 320, 420 ou 520 et la possibilité pour le conducteur d'appuyer sur celui-ci.

Selon un autre exemple, la durée d'affichage du bouton de contrôle selon la première représentation graphique 320, 420 ou 520 sur la zone d'affichage principale 21 de l'écran tactile 12 est fonction des premières données. Par exemple, la durée d'affichage est plus importante si les premières données indiquent une quantité de pluie occasionnant une visibilité très faible (inférieure à un seuil déterminé) sur le pare-brise du véhicule 10.

Selon un mode de réalisation de la présente invention, le bouton de contrôle selon la première représentation graphique 320, 420 ou 520 sur la zone d'affichage principale de l'écran tactile 12 disparaît à la suite de la réception des deuxièmes données. Ces deuxièmes données indiquent qu'un appui tactile a été détecté sur le bouton de contrôle, et il ne s'avère donc plus nécessaire d'afficher ce bouton de contrôle selon la première représentation graphique 320, 420 ou 520. Dit autrement, la réception des deuxièmes données déclenche en outre un contrôle de fin d'affichage du bouton de contrôle selon la première représentation graphique 320, 420 ou 520, le contenu affiché sur l'écran tactile 12 correspondant alors au contenu affiché avant l'affichage du bouton de contrôle selon la première représentation graphique 320, 420 ou 520.

Selon un mode de réalisation, le processus comprend en outre une opération de contrôle d'affichage du bouton de contrôle du système d'essuie-glace sur l'écran tactile 12 selon une deuxième représentation graphique 220, une taille du bouton de contrôle selon la deuxième représentation graphique 220 étant inférieure à un second seuil, le second seuil étant inférieur au premier seuil. Ce mode de réalisation permet de conserver un bouton de contrôle de taille réduite disponible sur l'écran tactile 12, par exemple lorsque le bouton de contrôle selon la première représentation graphique 320, 420 ou 520 disparaît de l'écran tactile 12.

Selon un mode de réalisation, l'affichage du bouton de contrôle selon la deuxième représentation graphique 220 est effectué sur une zone d'affichage secondaire 22 de l'écran tactile 12.

La zone d'affichage secondaire 22 correspond par exemple à un bandeau inférieur de l'écran tactile 12, représentant un ou plusieurs boutons de contrôle commandant l'activation d'un ou plusieurs systèmes du véhicule 10, l'un de ces boutons de contrôle étant le bouton de contrôle du système d'essuie-glace 10 selon la deuxième représentation graphique 220.

La figure 6 illustre schématiquement un dispositif 6 configuré pour le contrôle d'un système d'affichage d'un véhicule et/ou pour le contrôle d'un système d'essuie-glace d'un véhicule, par exemple le véhicule 10, selon des exemples de réalisation particuliers et non limitatifs de la présente invention. Le dispositif 6 correspond par exemple à un dispositif embarqué dans le véhicule 10, par exemple un calculateur.

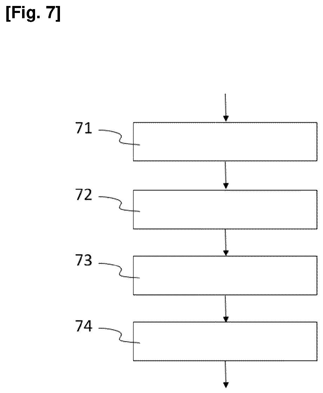

Le dispositif 6 est par exemple configuré pour la mise en œuvre des opérations décrites en regard des figures 1 à 5 et/ou des étapes du procédé décrit en regard de la figure 7. Des exemples d'un tel dispositif 6 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 6, individuellement ou en combinaison, peuvent être intégrés dans un unique circuit intégré, dans plusieurs circuits intégrés, et/ou dans des composants discrets. Le dispositif 6 peut être réalisé sous la forme de circuits électroniques ou de modules logiciels (ou informatiques) ou encore d'une combinaison de circuits électroniques et de modules logiciels.

Le dispositif 6 comprend un (ou plusieurs) processeur(s) 60 configurés pour exécuter des instructions pour la réalisation des étapes du procédé et/ou pour l'exécution des instructions du ou des logiciels embarqués dans le dispositif 6. Le processeur 60 peut inclure de la mémoire intégrée, une interface d'entrée/sortie, et différents circuits connus de l'homme du métier. Le dispositif 6 comprend en outre au moins une mémoire 61 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 61.

Selon différents exemples de réalisation particuliers et non limitatifs, le dispositif 6 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 6 comprend un bloc 62 d'éléments d'interface pour communiquer avec des dispositifs externes. Les éléments d'interface du bloc 62 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 6 comprend une interface de communication 63 qui permet d'établir une communication avec d'autres dispositifs (tels que d'autres calculateurs du système embarqué) via un canal de communication 630. L'interface de communication 63 correspond par exemple à un transmetteur configuré pour transmettre et recevoir des informations et/ou des données via le canal de communication 630. L'interface de communication 63 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 6 peut fournir des signaux de sortie à un ou plusieurs dispositifs externes, tels qu'un écran d'affichage 640, tactile ou non, un ou des haut-parleurs 650 et/ou d'autres périphériques 660 (système de projection) via respectivement des interfaces de sortie 64, 65 et 66. Selon une variante, l'un ou l'autre des dispositifs externes est intégré au dispositif 6.

La figure 7 illustre un organigramme des différentes étapes d'un procédé de contrôle d'un système d'essuie-glace d'un véhicule, par exemple le véhicule 10, selon un exemple de réalisation particulier et non limitatif de la présente invention. Le procédé est par exemple mis en œuvre par un dispositif embarqué dans le véhicule 10 ou par le dispositif 6 de la figure 6.

Dans une première étape 71, des premières données représentatives d'une détection d'une présence de pluie et/ou neige sur un pare-brise du véhicule sont reçues.

Dans une deuxième étape 72, l'affichage d'un bouton de contrôle du système d'essuie-glace est contrôlé pour afficher ce bouton sur une zone d'affichage principale de l'écran tactile selon une première représentation graphique en fonction des premières données, une taille du bouton selon la première représentation graphique étant supérieure à un premier seuil déterminé.

Dans une troisième étape 73, des deuxièmes données représentatives d'un appui tactile sur le bouton de contrôle sont reçues.

Dans une quatrième étape 74, des troisièmes données représentatives d'une commande d'activation du système d'essuie-glace sont transmises à destination d'un contrôleur du système d'essuie-glace, la transmission des troisièmes données étant déclenchée par la réception des deuxièmes données.

Selon une variante, les variantes et exemples des opérations décrits en relation avec l'une des figures 1 à 5 s'appliquent aux étapes du procédé de la figure 7.

Bien entendu, la présente invention ne se limite pas aux exemples de réalisation décrits ci-avant mais s'étend à un procédé d'affichage d'un bouton représentatif du système d'essuie-glace d'un véhicule selon différentes représentations graphiques qui inclurait des étapes secondaires sans pour cela sortir de la portée de la présente invention. Il en serait de même d'un dispositif configuré pour la mise en œuvre d'un tel procédé.

La présente invention concerne également un véhicule, par exemple automobile ou plus généralement un véhicule à moteur terrestre, comprenant le dispositif 6 de la figure 6 ou un système d'affichage comprenant le dispositif 6 de la figure 6 relié en communication à un écran tactile 12.

## Revendications

1. Procédé de contrôle d'un système d'essuie-glace d'un véhicule (10), ledit véhicule (10) embarquant un système d'affichage comprenant un écran tactile (12), ledit procédé étant mis en œuvre par un processeur et comprenant les étapes suivantes :
- réception (71) de premières données représentatives d'une détection d'une présence de pluie et/ou neige sur un pare-brise dudit véhicule (10)
- contrôle d'affichage (72) d'un bouton de contrôle dudit système d'essuie-glace sur une zone d'affichage principale (21) dudit écran tactile (12) selon une première représentation graphique (320) en fonction desdites premières données, une taille dudit bouton de contrôle selon ladite première représentation graphique (320) étant supérieure à un premier seuil déterminé,
- réception (73) de deuxièmes données représentatives d'un appui tactile sur ledit bouton de contrôle,
- transmission (74) de troisièmes données représentatives d'une commande d'activation dudit système d'essuie-glace à destination d'un contrôleur dudit système d'essuie-glace, ladite transmission étant déclenchée par la réception desdites deuxièmes données.

2. Procédé selon la revendication 1, dans lequel ledit premier seuil représente un ratio entre ladite taille dudit bouton de contrôle et une taille totale de ladite zone d'affichage principale dudit écran tactile (12).

3. Procédé selon la revendication 2, dans lequel ledit premier seuil est égal à 90%.

4. Procédé selon la revendication 2, dans lequel ledit premier seuil est égal à 50%.

5. Procédé selon l'une des revendications 1 à 4, dans lequel ledit premier seuil est paramétrable via une interface homme-machine dudit véhicule (10).

6. Procédé selon l'une des revendications précédentes, comprenant une étape de contrôle d'affichage dudit bouton de contrôle dudit système d'essuie-glace sur ledit écran tactile (12) selon une deuxième représentation graphique (220), une taille dudit bouton de contrôle selon ladite deuxième représentation graphique (220) étant inférieure à un second seuil, ledit second seuil étant inférieur au premier seuil.

7. Procédé selon la revendication 6, dans lequel l'affichage dudit bouton de contrôle selon ladite deuxième représentation graphique (220) est effectué sur une zone d'affichage secondaire (22) dudit écran tactile (12).

8. Programme d'ordinateur comportant des instructions de code de programme pour la mise en œuvre du procédé selon l'une quelconque des revendications précédentes, lorsque ledit programme est exécuté par un processeur.

9. Dispositif de contrôle d'un système d'essuie-glace d'un véhicule (10), ledit dispositif de contrôle comprenant une mémoire associée à au moins un processeur configuré pour la mise en œuvre des étapes du procédé selon l'une des revendications 1 à 7.

10. Véhicule (10) comprenant un dispositif selon la revendication 9.
